# EUROPÄISCHE PATENTSCHRIFT

(11) **EP 3 665 038 B1**
(45) Veröffentlichungstag und Bekanntmachung des Hinweises auf die Patenterteilung: **16.08.2023**
(21) Anmeldenummer: 18755771.5
(22) Anmeldetag: 10.08.2018
(51) Int. Cl.: B60N 2/06, B60N 2/07, B60N 2/90, B60N 2/02

(54) **LÄNGSEINSTELLER FÜR EINEN FAHRZEUGSITZ**
LONGITUDINAL ADJUSTER FOR A VEHICLE SEAT
MECANISME DE REGLAGE LONGITUDINAL POUR UN SIEGE DE VEHICULE

(30) Priorität: 11.08.2017 DE 102017214104
(43) Veröffentlichungstag der Anmeldung: 17.06.2020
(73) Patentinhaber: KEIPER Seating Mechanisms Co., Ltd., Shanghai, 201315 (CN)
(72) Erfinder: SPRENGER, Erik, 42929 Wermelskirchen (DE)
(74) Vertreter: Kutzenberger Wolff & Partner
(86) Internationale Anmeldenummer: PCT/EP2018/071724
(87) Internationale Veröffentlichungsnummer: WO 2019/030369

(56) Entgegenhaltungen:
- DE-A1- 10 139 631
- DE-A1-102010 001 847
- FR-A1- 2 796 013
- FR-A1- 2 872 747
- JP-A- 2008 222 034
- US-B2- 7 775 131
- US-B2- 8 523 263

## Beschreibung

Die Erfindung betrifft einen Längseinsteller für einen Fahrzeugsitz, insbesondere für einen Kraftfahrzeugsitz, und einen Fahrzeugsitz.

Aus dem Stand der Technik sind Längseinsteller bekannt, bei welchen ein Getriebe in einem Getriebegehäuse angeordnet ist und mit einer Sitzschiene des Längseinstellers gekoppelt ist.

Zum Beispiel ist ein Längseinsteller mit einer Halterung zur Aufnahme eines Getriebegehäuses aus der DE 10 2010 001 847 A1 bekannt.

Aufgabe der vorliegenden Erfindung ist es, einen gegenüber dem Stand der Technik verbesserten Längseinsteller für einen Fahrzeugsitz und einen verbesserten Fahrzeugsitz anzugeben. Insbesondere soll eine Montage eines Getriebes von unten in ein Schienenprofil ermöglicht sein und Störgeräusche im Fahrbetrieb reduziert oder vermieden sein.

Hinsichtlich des Längseinstellers wird die Aufgabe durch die im Patentanspruch 1 angegebenen Merkmale gelöst. Hinsichtlich des Fahrzeugsitzes wird die Aufgabe durch die im Patentanspruch 10 angegebenen Merkmale gelöst.

Der erfindungsgemäße Längseinsteller für einen Fahrzeugsitz umfasst eine Schienenanordnung mit zwei Schienenpaaren von Sitzschienen, wobei das jeweilige Schienenpaar eine erste Sitzschiene und eine zweite Sitzschiene aufweist, wobei die erste Sitzschiene beispielsweise eine feste Sitzschiene und die zweite Sitzschiene beispielsweise eine relativ zur ersten oder festen Sitzschiene bewegliche, insbesondere verschiebbare Sitzschiene ist. Des Weiteren umfasst der Längseinsteller eine Motoreinheit, eine Getriebeeinheit, die die Motoreinheit und die bewegliche Sitzschiene eines der Schienenpaare miteinander koppelt, sowie eine Halterung zur Aufnahme eines Getriebegehäuses der Getriebeeinheit. Die Halterung mit der Getriebeeinheit ist in einem durch das eine Schienenpaar gebildeten Hohlraum angeordnet und an deren beweglichen Sitzschiene befestigt sowie an einem Ende offen und am gegenüberliegenden Ende geschlossen ausgebildet, wobei die Halterung am offenen Ende zumindest ein Versteifungselement aufweist.

Dies ermöglicht in einfacher Art und Weise eine erhöhte Steifigkeit und sichere Abstützung, so dass Längslasten übertragen werden können. Zudem ist die Montage vereinfacht, insbesondere ist eine Montage von unten in den Hohlraum ermöglicht. Zudem sind Störgeräusche beim Verstellen weitgehend vermieden.

Ein Aspekt sieht vor, dass die Halterung mit dem geschlossenen Ende an der beweglichen Sitzschiene des einen Schienenpaares befestigt ist.

In einer möglichen Ausführungsform ist das Versteifungselement derart am offenen Ende angeordnet, dass eine Öffnung zur Aufnahme der Getriebeeinheit in die Halterung gebildet ist.

Des Weiteren können die Halterung und das Versteifungselement zu einer Vorbaugruppe vormontiert sein. Hierdurch können Einzelteiltoleranzen kompensiert werden. Beispielsweise ist das Versteifungselement am offenen Ende der Halterung befestigt. Dabei kann das Versteifungselement mit dem offenen Ende der Halterung verschweißt, verklebt, vernietet, verschraubt, verlötet oder an dieses genietet, geschraubt, geklebt oder gelötet oder in einer anderen geeigneten Art fest verbunden werden.

In einer möglichen Ausführungsform ist das Versteifungselement als mindestens eine Strebe, insbesondere eine Zug- oder Druckstrebe, beispielsweise als ein Draht, zum Beispiel ein Metalldraht, ausgebildet. Dabei können ein oder mehrere Streben vorgesehen sein und an der Halterung befestigt sein.

In einer alternativen Ausführungsform ist das Versteifungselement als eine Klammer, insbesondere eine Federklammer, zum Beispiel ein Federstahlblech, ausgebildet.

Beispielsweise ist die Halterung als ein U-Profil ausgebildet. Das U-Profil weist zwei Schenkel auf, an deren offenem Ende das mindestens eine Versteifungselement angeordnet ist und die Schenkel verbindet.

Ein weiterer Aspekt sieht einen Längseinsteller für einen Fahrzeugsitz, insbesondere für einen Kraftfahrzeugsitz, zur motorischen Längseinstellung des Fahrzeugsitzes vor, wobei der Längseinsteller eine Schienenanordnung mit zwei Schienenpaaren von Sitzschienen umfasst, wobei das jeweilige Schienenpaar eine erste Sitzschiene und eine relativ zur ersten Sitzschiene verschiebbare zweite Sitzschiene aufweist. Darüber hinaus umfasst der Längseinsteller eine Motoreinheit, eine Getriebeeinheit sowie eine Halterung zur Aufnahme eines Getriebegehäuses der Getriebeeinheit. Die Halterung ist an einem Ende offen und am gegenüberliegenden Ende geschlossen ausgebildet, wobei die Halterung mit dem geschlossenen Ende an einer der Sitzschienen befestigt ist. Am offenen Ende der Halterung ist zumindest ein Versteifungselement angeordnet. Beispielsweise sind zwei Streben, zum Beispiel Zug- oder Druckstreben, vorgesehen, die das offene Ende der Halterung verbinden.

Durch diese Struktur wird die Halterung hinsichtlich einer Lastbeanspruchung verbessert. Insbesondere wird die Steifigkeit erhöht.

In einer möglichen Ausführungsform ist das Versteifungselement derart ausgebildet und am offenen Ende der Halterung angeordnet, dass eine Öffnung zur Aufnahme der Getriebeeinheit in die Halterung gebildet ist. Hierdurch ist eine einfache Montage der Getriebeeinheit in der Halterung möglich. Beispielsweise sind die Streben weit außen am offenen Ende der Halterung gesetzt.

In einer weiteren Ausführungsform kann das Versteifungselement vormontiert sein und als eine Montageeinheit auf die Halterung aufgebracht werden. Beispielsweise sind mehrere Streben zu einem Rahmen zusammengesetzt und vormontiert und bilden eine Montageeinheit. Hierdurch können Einzelteiltoleranzen der Halterung vor Befestigung des Versteifungselements kompensiert werden.

Bedingt durch die verbesserte Steifigkeit der Halterung kann an den vertikalen Seiten ein Spalt zwischen Halterung und Getriebeeinheit eingehalten werden, der verhindert, dass es zu einem Kontakt im Fahrbetrieb kommt. Somit sind Störgeräusche sicher vermieden.

Die Getriebeeinheit umfasst zumindest eine Gewindespindel, welche zumindest mit der ersten Sitzschiene einer der Paare fest verbunden ist, und ein mit der Gewindespindel zusammenwirkendes Getriebeelement, zum Beispiel ein Schneckenrad. Ferner umfasst der Längseinsteller eine Übertragungseinheit, die sowohl mit der Getriebeeinheit als auch der Motoreinheit gekoppelt ist, zur Übertragung einer Drehkraft der Motoreinheit auf die Gewindespindel und ein Getriebegehäuse, welches die Getriebeeinheit zumindest teilweise einhäust, sowie die Halterung zur Aufnahme des Getriebegehäuses. Dabei ist die Halterung mit dem Getriebegehäuse in einem zwischen der ersten Sitzschiene und der zweiten Sitzschiene des einen Schienenpaares gebildeten Hohlraum angeordnet und ragt durch eine Schienenöffnung in der zweiten Schiene aus dieser zumindest teilweise derart heraus, dass die Halterung die Schienenöffnung in der zweiten Schiene schließt.

In einer möglichen Ausführungsform ist die Halterung derart ausgebildet, dass das Getriebegehäuse zwischen zwei Halteschenkel der Halterung angeordnet ist, die in Längsrichtung voneinander beabstandet sind und sich vertikal erstecken. Dabei sind die zwei Halteschenkel insbesondere mit der zweiten Sitzschiene gekoppelt, insbesondere mit dieser zumindest form- oder kraftschlüssig verbunden.

In einer weiteren Ausführungsform ist die Halterung U-förmig ausgebildet, wobei eine Schenkelöffnung der U-förmig ausgebildeten Halterung in Richtung der ersten Sitzschiene zeigt und ein durch die Halteschenkel gebildeter Zwischenraum das Getriebegehäuse umfasst. Somit ist das Getriebegehäuse in Bezug auf eine Oberseite der zweiten Sitzschiene, d. h. der Oberschiene mittels eines die zwei Halteschenkel verbindenden Abschnitts der Halterung abgedeckt. Beispielsweise weist die U-förmige Halterung eine Form eines Bügelelements und/oder einer Sattelhalterung auf. Des Weiteren weist jede der Halteschenkel eine Durchgangsöffnung zur Durchführung der Gewindespindel auf.

In einer Weiterbildung der Erfindung sind die freien Schenkel der Halterung, die das offene Ende der Halterung bilden, mit dem Versteifungselement versehen, das diese Schenkel verbindet. Wie oben bereits beschrieben, sind beispielsweise mehrere, insbesondere mindestens zwei Zug- oder Druckstreben vorgesehen, die die freien Schenkel an ihren äußeren Ecken miteinander verbinden.

Die mit der Erfindung erzielten Vorteile bestehen insbesondere darin, dass mittels der erfindungsgemäßen Halterung der Längseinsteller weitestgehend kompakt ausbildbar ist. Insbesondere kann dadurch eine Schienenanordnung gegenüber herkömmlichen Schienenanordnungen im Wesentlichen flacher und kompakter ausgebildet werden. Hierfür entfallen beispielsweise zusätzliche Verstärkungs- und Abdeckelemente zur Fixierung und zum Schutz des Getriebegehäuses. Beispielsweise ragt das Getriebegehäuse aufgrund einer benötigten Einbauhöhe (in vertikaler Richtung) des auf der Gewindespindel angeschraubten Getriebeelements (Schneckenrad) von der Oberseite der zweiten Sitzschiene ab.

In einer Weiterbildung des Längseinstellers ist die U-förmig ausgebildete Halterung zumindest formschlüssig, kraftschlüssig und/oder stoffschlüssig mit der zweiten Sitzschiene verbunden. Eine Außenkontur der Halteschenkel und des die Halteschenkel verbindenden Abschnitts sind insbesondere jeweils einem Schienenprofil der zweiten Sitzschiene, insbesondere einem Schieneninnenprofil, angepasst. Dadurch werden keine weiteren Befestigungselemente, wie zum Beispiel Schrauben oder Nieten, zur Befestigung der Halterungen der zweiten Schiene, insbesondere einer Oberschiene, benötigt. Mittels einer solchen mit der Schieneninnenkontur/ -profil korrespondierenden Außenkontur der Halterung kann diese innenseitig in der zweiten Schiene form- oder kraftschlüssig, beispielsweise klemmend oder geklipst gehalten werden. Hierdurch können Montagezeit und Materialkosten verringert werden.

In einer möglichen Ausführungsform ist die Halterung in der Schienenöffnung der zweiten Schiene kraft- oder formschlüssig gehalten, insbesondere klemmend oder geklipst gehalten. Hierzu sind beispielsweise die Halteschenkel flexibel ausgebildet. Beispielsweise sind die Halteschenkel in Form von elastischen Klemmarmen ausgebildet, wobei beim Einsetzen der Halterung mit den in die Schienenöffnung weisenden Halteschenkeln diese gegen eine Federkraft nach innen gedrückt werden. Im eingesetzten Zustand schnappen die Halteschenkel selbstständig federnd nach außen und klemmen die Halterung in der Schienenöffnung ein. Mit anderen Worten: Die Halterung ist beispielsweise im Klemmsitz in der Schienenöffnung gehalten.

Zusätzlich oder alternativ kann die Halterung in Ausnehmungen in Seitenwänden der zweiten Schiene kraft- oder formschlüssig gehalten, insbesondere klemmend oder geklipst gehalten sein.

Dabei kann der Längseinsteller derart ausgebildet sein, dass die zweite Sitzschiene eine Mehrzahl von Ausnehmungen umfasst. Die Oberseite der Sitzschiene weist zumindest eine Ausnehmung als die Schienenöffnung zur Aufnahme des verbindenden Abschnitts der U-förmig ausgebildeten Halterung auf. Durch die in der Oberseite ausgebildete Schienenöffnung wird beispielsweise eine mechanische Festigkeit und Belastbarkeit der zweiten Sitzschiene in Längs- und Querrichtung verringert.

Durch die insbesondere in Bezug auf die Hochachse umgekehrte Anordnung der U-förmigen Halterung (auch Haltebügel genannt) mit dem geschlossenen Abschnitt, im eingesetzten Zustand der Halterung nach oben aus der zweiten Sitzschiene herausragend, ist die Schienenöffnung einfach geschlossen und das Getriebegehäuse nach außen abgedeckt.

Dabei ist die umgekehrt angeordnete U-förmige Halterung zumindest form- oder kraftschlüssig in der Schienenöffnung der zweiten Sitzschiene anordbar und dient als Verstärkungselement der zweiten Sitzschiene. Darüber hinaus ist der von der Oberseite der zweiten Sitzschiene abragende Gehäusebereich des Getriebegehäuses von der Halterung abgedeckt und vor äußeren Einflüssen geschützt. Somit ist die U-förmige Halterung sowohl zur Befestigung und Positionierung als auch zur Abdeckung des Getriebegehäuses und zur Verstärkung der zweiten Sitzschiene vorgesehen.

Des Weiteren ist ein Raum unterhalb der U-förmigen Halterung, insbesondere der Raum zwischen der ersten Sitzschiene (Unterschiene) und der Halterung vergrößert. Hierzu sind beispielsweise die Halteschenkel nach außen gespreizt und in einem vorgegebenen Schenkelwinkel zueinander angeordnet. Insbesondere ist dieser vergrößerte Raum aufgrund der umgedrehten Anordnung der U-förmigen Halterung unterhalb des Verbindungsabschnitts und nach innen in den Schieneninnenraum gerichtet und gebildet. Dadurch können weitere Bauteile des Längseinstellers in den somit neu gebildeten innenliegenden Montageraum angeordnet werden.

Beispielsweise weist die Halterung eine Breite (in Querrichtung) von 17,8 mm, eine Höhe (in vertikaler Richtung) von 32 mm und eine Länge (in Längsrichtung) von 29,4 mm auf. Zum Beispiel kann ein Abstand einer Oberseite des Getriebegehäuses zu einer Unterseite der Halterung 1,7 mm betragen. Ein Gesamtgewicht der aus der Halterung, dem Getriebegehäuse mit dem Getriebeelement bestehenden Baueinheit beträgt beispielsweise 66,9 g.

In einer Weiterbildung können Gehäuseseitenteile des Getriebegehäuses weitestgehend schmal ausgebildet werden, so dass das Getriebegehäuse eine Breite (in Querrichtung) in einem Bereich von 15 mm bis 20 mm, beispielsweise von 17 mm, eine Höhe (in vertikaler Richtung) in einem Bereich von 20 mm bis 30 mm, beispielsweise von 27 mm und eine Länge (in Längsrichtung) in einem Bereich von 20 mm bis 26 mm, beispielsweise von 24 mm aufweist. Ein Gewicht des Getriebegehäuses mit dem innerhalb des Getriebegehäuses angeordneten Getriebeelements liegt beispielsweise in einem Bereich von 30 g bis 38 g, beträgt beispielsweise 34 g.

Darüber hinaus ist die U-förmig ausgebildete Halterung in einfacher Weise herstellbar. Beispielsweise ist die U-förmige Halterung mittels eines Spritzgussverfahrens oder einem Press- und/oder Faltverfahren herstellbar.

Eine mögliche Ausführungsform des Längseinstellers sieht vor, dass die Halteschenkel jeweils zumindest eine Anzahl von an seitlichen Randbereichen angeordneten Vorsprüngen umfassen, wobei eine Form der jeweiligen Vorsprünge mit einer Form von seitlichen Ausnehmungen der zweiten Sitzschiene korrespondiert. Insbesondere sind die Vorsprünge jeweils in einem unteren Seitenrandbereich der Halteschenkel angeordnet. Weiterhin sind die Vorsprünge jeweils stufenförmig ausgebildet. Die Halterung ist zumindest kraft- oder formschlüssig in der zweiten Sitzschiene gehalten, insbesondere befestigt.

In einer Weiterbildung sind zumindest die Vorsprünge flexibel ausgebildet, beispielsweise aus einem Kunststoff gebildet, wobei die Vorsprünge zur form- oder kraftschlüssigen Verbindung in den korrespondierenden Ausnehmungen gehalten, insbesondere klemmend, rastend oder schnappend gehalten sind. In einer weiteren Ausführungsform sind die Vorsprünge beispielsweise stufig ausgebildet. Dies ermöglicht eine Vorrastung der Komponenten des Längseinstellers beim Zusammensetzen des Längseinstellers zum Beispiel für eine Ausrichtung der Komponenten und eine Hauptrastung im zusammengesetzten Zustand der Komponenten des Längseinstellers und somit ein Fixieren dieser zueinander.

In einem weiteren Ausführungsbeispiel ist das Getriebegehäuse zumindest mit den Halteschenkeln der U-förmig ausgebildeten Halterung verbunden. Dadurch wird das Getriebegehäuse insbesondere während einer ausgeführten Längsverschiebung der zweiten Sitzschiene von den Halteschenkeln gestützt.

Zusätzlich kann die Schienenöffnung in Längsrichtung gesehen an gegenüberliegenden Öffnungsseiten jeweils ein Anschlagelement für die nach außen gespreizten Halteschenkel aufweisen. Alternativ oder zusätzlich kann jeder Halteschenkel an seiner Schenkelaußenseite eine nach außen weisende Rastnase aufweisen, die beispielsweise in das zugehörige Anschlagelement rastend eingreift.

In einer Weiterbildung ist ein Fahrzeugsitz mit dem zuvor beschriebenen Längseinsteller zur motorischen Längseinstellung des Fahrzeugsitzes ausgestattet.

Ausführungsbeispiele der Erfindung werden anhand von Zeichnungen näher erläutert.

Dabei zeigen:
- Figur 1A: schematisch eine Seitenansicht eines Fahrzeugsitzes mit einem Längseinsteller,
- Figur 1B: schematisch in perspektivischer Darstellung eine Schienenanordnung für einen Längseinsteller,
- Figuren 2A und 2B: schematisch jeweils eine Seitenansicht bzw. eine Schnittdarstellung eines Ausführungsbeispiels des Längseinstellers,
- Figur 2C: schematisch eine Draufsicht auf eine Stirnseite einer der Schienen,
- Figuren 3A und 3B: schematisch eine Schnittdarstellung eines Längseinstellers ohne bzw. mit in Halterung montierter Getriebeeinheit,
- Figuren 4A bis 4D: schematisch verschiedene Darstellungen einer Halterung für eine Getriebeeinheit,
- Figuren 5A bis 5D: schematisch verschiedene Darstellungen einer Halterung für eine Getriebeeinheit mit Ansicht auf ein offenes Ende der Halterung, und
- Figuren 6A bis 6D: schematisch verschiedene perspektivische Darstellungen einer in einer Schiene angeordneten Halterung,
- Figuren 7A bis 7C: schematisch verschiedene Darstellungen einer alternativen Ausführungsform eines Versteifungselements für eine Halterung einer Getriebeeinheit eines Längseinstellers,
- Figuren 8A bis 8D: schematisch verschiedene perspektivische Darstellungen einer Halterung mit dem alternativen Versteifungselement, und
- Figuren 9A und 9B: schematisch in Draufsicht auf die Querseite die Halterung mit dem alternativen Versteifungselement.

Einander entsprechende Teile sind in allen Figuren mit den gleichen Bezugszeichen versehen.

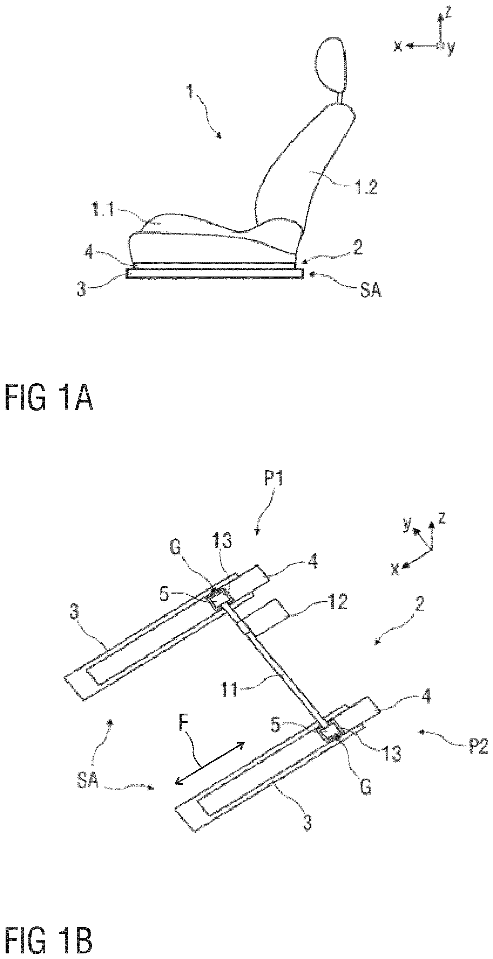

**Figur 1A** zeigt in Seitenansicht ein mögliches Ausführungsbeispiel eines Fahrzeugsitzes 1, umfassend zumindest einen Längseinsteller 2 mit einer Schienenanordnung SA.

**Figur 1B** zeigt in perspektivischer Ansicht ein mögliches Ausführungsbeispiel des Längseinstellers 2 mit der Schienenanordnung SA.

Eine Anordnung des Fahrzeugsitzes 1 im Fahrzeug wird dabei anhand des nachfolgend verwendeten Koordinatensystems definiert, umfassend eine einer Hochrichtung des Fahrzeugs zugeordneten Hochachse z, eine einer Längsrichtung des Fahrzeugs zugeordneten Längsachse x und eine einer Querrichtung des Fahrzeugs zugeordneten Querachse y.

Der Fahrzeugsitz 1 umfasst beispielsweise eine Sitzfläche 1.1 und eine an der Sitzfläche 1.1 angeordneten Rückenlehne 1.2.

Der Längseinsteller 2 ist zur Längsverschiebbarkeit des Fahrzeugsitzes 1 vorgesehen und umfasst, wie in **Figur 1B** dargestellt, zwei Schienenpaare P1, P2 von Sitzschienen 3, 4.

Dabei weist das jeweilige Schienenpaar P1 oder P2 eine erste, untere Sitzschiene 3 und eine gegenüber der unteren Sitzschiene 3 in Längsrichtung verschiebbare zweite, obere Sitzschiene 4 auf. Im dargestellten Ausführungsbeispiel ist die obere Sitzschiene 4 an der Sitzfläche 1.1 angeordnet und befestigt.

Die untere Sitzschiene 3 ist dabei fahrzeugfest an einer Fahrzeugstruktur, beispielsweise an einem Fahrzeugboden, angeordnet und befestigt.

Insbesondere bilden die erste, untere und feste Sitzschiene 3 und die zweite, obere und bewegliche, insbesondere längsbewegliche Sitzschiene 4 ein einzelnes Schienenpaar P1, P2, wobei beispielsweise auf jeder Seite des Fahrzeugsitzes 1 ein Schienenpaar P1 oder P2 angeordnet ist.

Der Längseinsteller 2 umfasst eine Getriebeeinheit G, welche zumindest mit der zweiten, insbesondere beweglichen Sitzschiene 4 zumindest einer der Schienenpaare P1, P2 verbunden, insbesondere lösbar verbunden ist. Im gezeigten Ausführungsbeispiel weisen beide Schienenpaare P1, P2 eine Getriebeeinheit G auf.

Die beiden Schienenpaare P1, P2 sind mittels einer Übertragungseinheit 11 miteinander verbunden. Zur motorischen Längsverstellung des Fahrzeugsitzes 1 ist eine Motoreinheit 12 vorgesehen, welche mit der Übertragungseinheit 11 gekoppelt ist.

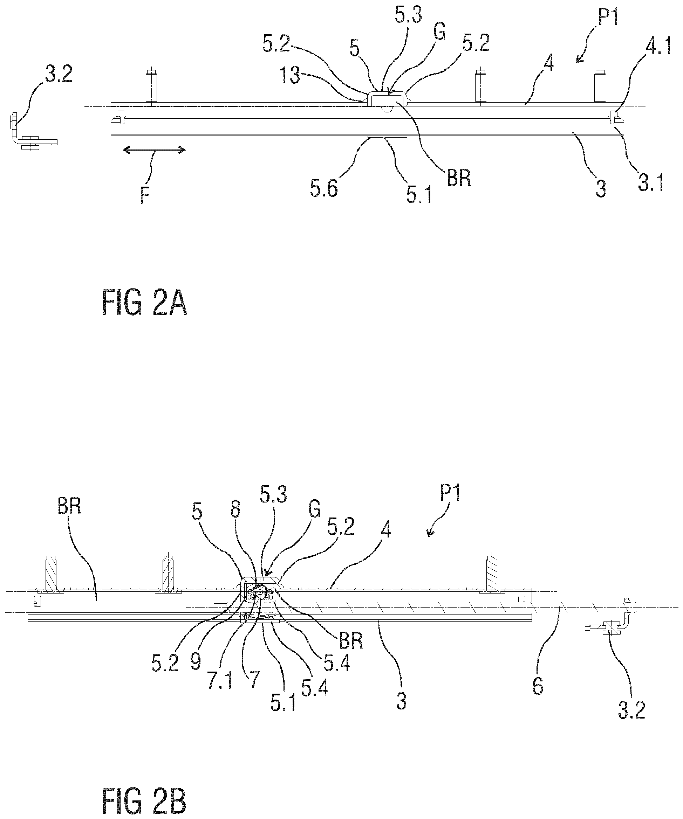

Der Längseinsteller 2 umfasst somit zumindest die Motoreinheit 12, die Getriebeeinheit G, die die Motoreinheit 12 und die zweite, bewegliche Sitzschiene 4 mindestens eines der Schienenpaares P1 miteinander koppelt, sowie eine Halterung 5 zur Aufnahme eines Getriebegehäuses 9 der Getriebeeinheit G. Dabei ist die Halterung 5 mit der Getriebeeinheit G in einem durch das eine Schienenpaar P1 gebildeten Hohlraum BR angeordnet und an deren beweglichen Sitzschiene 4 befestigt sowie an einem Ende 5.7 offen und am gegenüberliegenden Ende geschlossen ausgebildet, wobei die Halterung 5 am offenen Ende 5.7 zumindest ein Versteifungselement 5.6 aufweist, wie nachfolgend näher von verschiedenen Ausführungsbeispielen in den Figuren 2A bis 9B beschrieben wird.

Der Antrieb des Längseinstellers 2 ist beispielsweise als ein Spindelantrieb ausgebildet und umfasst beispielsweise einen Elektromotor als Motoreinheit 12 und die Getriebeeinheit G, mittels welcher eine Drehbewegung des Elektromotors auf eine Gewindespindel 6 übertragen wird. Durch den Spindelantrieb wird es ermöglicht, eine rotatorische Bewegung des Elektromotors über die Getriebeeinheit G in eine translatorische Bewegung der Gewindespindel 6 umzuwandeln.

**Figuren 2A und 2B** zeigen eine Seitenansicht bzw. eine Schnittdarstellung eines der Schienenpaare P1, P2 des Längseinstellers 2, umfassend die untere Sitzschiene 3, die obere Sitzschiene 4 und die Getriebeeinheit G.

Die Halterung 5 ist dabei zusammen mit dem aufgenommenen und in der Halterung 5 gehaltenen Getriebegehäuse 9 in einem zwischen der ersten, unteren Sitzschiene 3 und der zweiten, oberen Sitzschiene 4 gebildeten Hohlraum BR (auch Bauraum genannt) angeordnet. Darüber hinaus ragt die Halterung 5 durch eine Schienenöffnung 13 in der oberen Schiene 4 aus dieser zumindest teilweise derart heraus. Dabei schließt die Halterung 5 diese Schienenöffnung 13 und deckt damit sowohl den darunter liegenden Schieneninnenraum als auch das Getriebegehäuse 9 ab.

Die untere Sitzschiene 3 und die obere Sitzschiene 4 umgreifen sich gegenseitig mit ihren im Wesentlichen U-förmigen Profilen mit nach innen bzw. nach außen gebogenen Schienenseitenwänden 3.1, 4.1. Somit ist ein geschlossenes Schienenprofil gebildet.

Weiterhin umfasst der Längseinsteller 2 innerhalb des durch das Schienenprofil definierten Bauraums oder Hohlraums BR die mit der unteren Sitzschiene 3 fest verbundene und in Längsrichtung (x-Achse) verlaufende Gewindespindel 6.

Zur Halterung der Gewindespindel 6 ist beispielsweise ein Halteelement 3.2 vorgesehen, das schienenseitig oder karosserieseitig fixiert ist und in welche die Gewindespindel 6 gesteckt und form- und/oder kraftschlüssig gehalten ist.

Insbesondere ist das Halteelement 3.2 in einem in Längsrichtung ausgebildeten Endbereich der unteren Sitzschiene 3 oder außerhalb eines der Enden der unteren Sitzschiene 3 angeordnet. Dabei kann das zumindest eine Halteelement 3.2 beispielsweise als ein Profilelement, insbesondere ein L-Profil oder als ein Blockelement ausgebildet sein, welches die Gewindespindel 6 in Position hält. Das Halteelement 3.2 ist beispielsweise als eine L-förmige Lasche mit einer Durchgangsöffnung zur Durchführung und Halterung der Gewindespindel 6 ausgebildet.

Die Gewindespindel 6 erstreckt sich dabei im Wesentlichen über die Länge der unteren Sitzschiene 3.

Beispielsweise weist die Gewindespindel 6 zumindest eine Länge in einem Bereich von 280 mm bis 330 mm, insbesondere von 320 mm auf, wobei ein Verfahrweg F der Getriebeeinheit G und somit des Fahrzeugsitzes 1 eine maximale Länge in einem Bereich von 240 mm bis 280 mm, beispielsweise von mindestens 260 mm aufweist.

Des Weiteren umfasst der Längseinsteller 2 als Getriebeeinheit G ein mit der Gewindespindel 6 zur Längseinstellung zusammenwirkendes drehbares Getriebeelement 7.

Das Getriebeelement 7 umfasst eine auf der Gewindespindel 6 drehbar angeordnete Spindelmutter 7.1. Die Spindelmutter 7.1 weist eine Außenverzahnung auf, in welche ein senkrecht zur Gewindespindel 6 angeordnetes Antriebselement 8 eingreift.

Im dargestellten Ausführungsbeispiel umfasst der Längseinsteller 2 beispielsweise als mit dem Getriebeelement 7 in Verbindung stehendes Antriebselement 8, ein Schneckenrad (auch Antriebsschnecke genannt) 8.1, welches in Getriebeeingriff mit dem Getriebeelement 7 steht. Des Weiteren steht das Antriebselement 8 beispielsweise über die Übertragungseinheit 11 in Wirkverbindung mit der elektrischen Motoreinheit 12 (auch Antriebsmotor genannt) des Längseinstellers 2.

In der zweiten, oberen Sitzschiene 4 ist das Getriebegehäuse 9 zur Aufnahme des Getriebeelements 7 und Antriebselements 8 vorgesehen.

Insbesondere ist das Getriebegehäuse 9 ausgebildet, um das Getriebeelement 7 und das Antriebselement 8 in dem durch das Schienenprofil definierten Bauraum BR mit größtmöglicher Steifigkeit und Festigkeit zu lagern und zu halten.

Das Getriebegehäuse 9 umfasst eine Anzahl von Gehäuseteilen. Beispielsweise umfasst das Getriebegehäuse 9 zwei Gehäuseseitenteile und ein Gehäuseoberteil sowie ein Gehäuseunterteil. Die Gehäuseteile sind beispielsweise miteinander stoff-, form- und/oder kraftschlüssig verbunden. Beispielsweise sind die Gehäuseteile ineinander gesteckt, insbesondere rastend miteinander verbunden. Alternativ oder zusätzlich können diese miteinander verschraubt, vernietet oder geschweißt sein.

Zur Abdeckung des über dem Getriebeelement 7 angeordneten Antriebselements 8 umfasst das Getriebegehäuse 9 das Gehäuseoberteil, das zumindest mit einem der seitlichen Gehäuseseitenteile stoff-, form- und/oder kraftschlüssig verbunden ist.

Im dargestellten Ausführungsbeispiel ragt ein Getriebegehäuseabschnitt durch die in einer Oberseite der zweiten, oberen Sitzschiene 4 ausgebildete Schienenöffnung 13.

Zur Halterung und Verstärkung des Getriebegehäuses 9 umfasst der Längseinsteller 2 die Halterung 5.

Die Halterung 5 ist in der zweiten, oberen Sitzschiene 4 angeordnet und mit dieser verbunden. Beispielsweise ist die Halterung 5 U-förmig, insbesondere als ein U-förmiger Haltebügel, ausgebildet. Die Halterung 5 umfasst dabei zwei Halteschenkel 5.2, die an einem Schenkelende mittels eines die Enden der Halteschenkel 5.2 verbindenden Abschnitts 5.3 verbunden sind. An den gegenüberliegenden Enden der Halteschenkel 5.2 weist die Halterung 5 eine Schenkelöffnung 5.1 auf. Im eingesetzten und zusammengebauten Zustand der Getriebeeinheit G ist die Schenkelöffnung 5.1 in Richtung der ersten, unteren Sitzschiene 3 ausgerichtet.

Weiterhin weist die Halterung 5 in Längsrichtung (x-Achse) die voneinander beabstandeten und mit der zweiten Sitzschiene 4 in Verbindung stehenden, vertikal ausgebildeten Halteschenkel 5.2 auf. Die Halteschenkel 5.2 sind mittels des im Wesentlichen horizontal ausgebildeten Abschnitts 5.3 miteinander verbunden. Zusätzlich sind die Halteschenkel 5.2 am offenen Ende der Halterung 5 und damit an der Schenkelöffnung 5.1 mittels mindestens eines Versteifungselements 5.6 verbunden.

Des Weiteren können die Halteschenkel 5.2 mit dem jeweilig korrespondierenden Gehäuseseitenteil stoff-, kraft- und/oder formschlüssig verbunden sein. Insbesondere sind die Halteschenkel 5.2 jeweils mit den korrespondierenden Gehäuseteilen verschweißt.

Darüber hinaus ist jeder Halteschenkel 5.2 der U-förmig ausgebildeten Halterung 5 mit der zweiten Sitzschiene 4 verbunden. Hierzu umfasst jeder Halteschenkel 5.2 mindestens ein Kopplungselement, mittels dessen der Halteschenkel 5.2 an der zweiten Sitzschiene 4 gehalten ist.

Beispielsweise ist der jeweilige Halteschenkel 5.2 an beispielsweise drei Oberflächen (Oberseite und Seitenschenkel) mit der zweiten Sitzschiene 4 verbunden. Insbesondere ist die Halterung 5 mit der zweiten Sitzschiene 4 an miteinander korrespondierenden Stellen formschlüssig, zum Beispiel rastend, kraftschlüssig, zum Beispiel federnd geklemmt, oder stoffschlüssig, zum Beispiel verschweißt, verbunden.

Des Weiteren weist jeder der Halteschenkel 5.2 eine Durchgangsöffnung 5.4 zur Durchführung der Gewindespindel 6 auf. Weiterhin ist das Gehäuseoberteil zu einer Innenwand des Abschnitts 5.3 der Halterung 5 beabstandet. Der Abstand A liegt in einem Bereich von wenigen Millimetern, insbesondere in einem Bereich von 1 mm bis 3 mm, beispielsweise von 1,5 mm.

Aufgrund der dargestellten Anordnung der U-förmig ausgebildeten Halterung 5 ist das L-förmige Halteelement 3.2 bauraumnutzend in dem Längseinsteller 2 oder im Bereich von diesem anordbar. Eine untere Befestigungsseite des L-förmigen Halteelements 3.2 ist unterhalb der Gewindespindel 6 und parallel zu dieser sowie insbesondere in Richtung der Gewindespindel 6 angeordnet und kann in den Bauraum BR hineinragend ausgerichtet sein. Das Halteelement 3.2 ist derart ausgebildet, dass dieses einen Endanschlag für die Halterung 5 bildet bei einem Längsverstellvorgang.

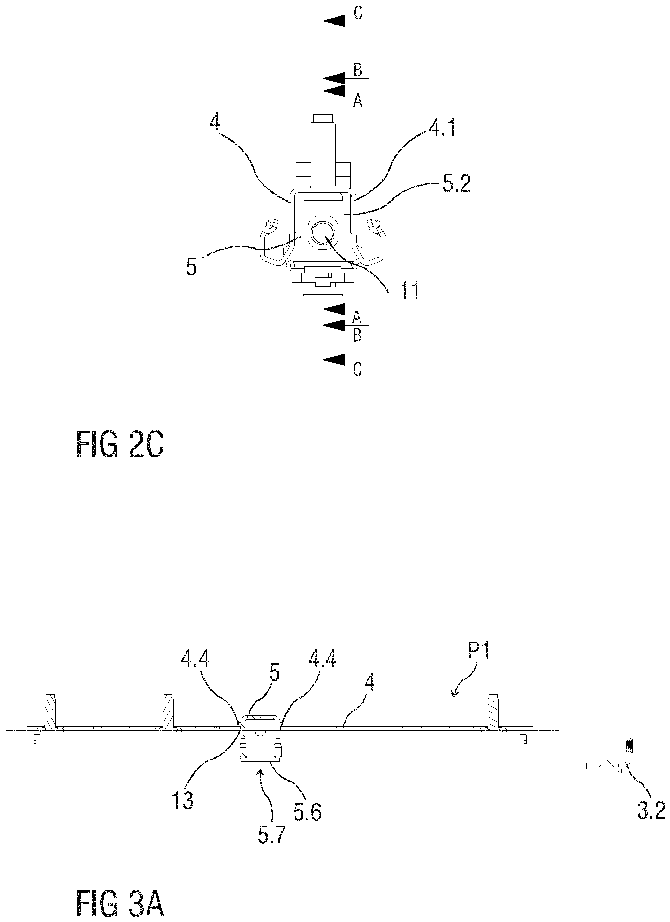

**Figur 2C** zeigt eine Draufsicht auf eine Stirnseite der Schiene 4.

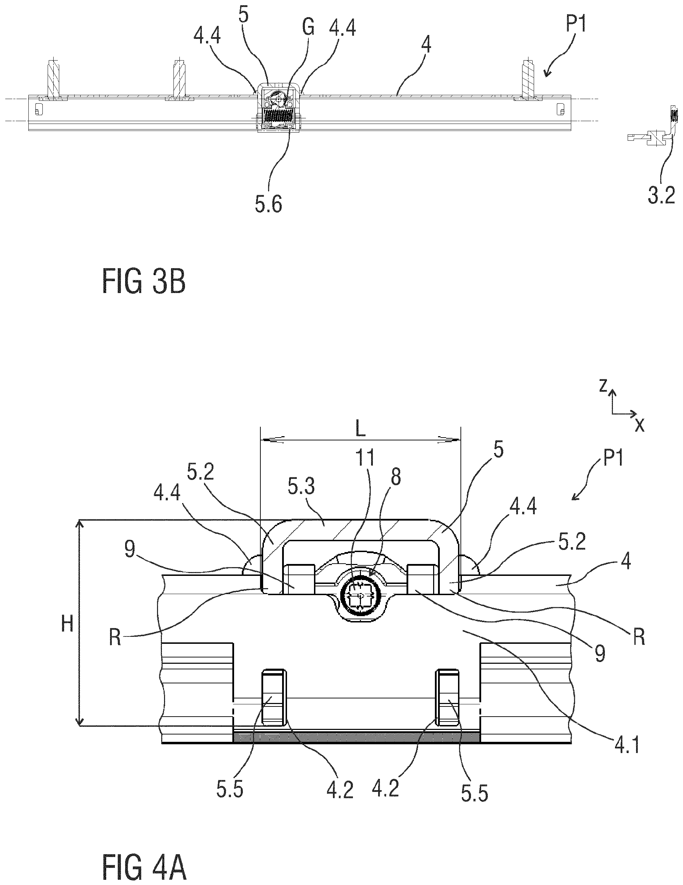

**Figuren 3A** **und** **3B** zeigen jeweils eine Schnittdarstellung der oberen Schiene 4 mit der eingebauten Halterung 5 ohne montierter Getriebeeinheit G bzw. mit montierter Getriebeeinheit G. Beim Montieren des Längseinstellers 2 wird zunächst die Halterung 5 in der Schiene 4 montiert. Anschließend wird die Getriebeeinheit G vom offenen Ende 5.7 der Halterung 5 in diese eingesetzt und fixiert. Die Halterung 5 ist insbesondere form- und/oder kraftschlüssig in der Schiene 4 fixiert. Alternativ oder zusätzlich kann die Halterung 5 stoffschlüssig mit der Schiene 4 verbunden sein, insbesondere mittels einer Schweißverbindung.

Im Bereich der Schienenöffnung 13 können von der Schienenoberseite abstehende Anschläge 4.4 vorgesehen sein, welche die aus der Schiene 4 herausstehende Halterung 5 seitlich abstützen.

**Figur 4A** zeigt eine vergrößerte Darstellung eines der Schienenpaare P1 im Bereich der Schienenöffnung 13 mit montierter Halterung 5 und Getriebeeinheit G.

Die Halterung 5 ist als ein Profilelement, insbesondere als ein U-förmiger Haltebügel ausgebildet. Die Halterung 5 umfasst zwei Halteschenkel 5.2, die mittels des Abschnitts 5.3 miteinander verbunden sind. Die Halterung 5 ist einstückig ausgebildet und beispielsweise ein Formteil. An den freien Enden der Halteschenkel 5.2 stehen nach außen Vorsprünge 5.5 ab.

Im dargestellten Ausführungsbeispiel umfasst jeder Halteschenkel 5.2 an jedem seitlichen Randbereich R einen Vorsprung 5.5. Eine Form der jeweiligen Vorsprünge 5.5 korrespondiert mit seitlichen Ausnehmungen 4.2 der zweiten Sitzschiene 4. Dabei sind die Vorsprünge 5.5 eingerichtet, um in die Ausnehmungen 4.2 form- und/oder kraftschlüssig einzugreifen. Insbesondere rasten die Vorsprünge 5.5 in die Ausnehmungen 4.2 ein.

In der dargestellten Ausführungsform sind die Vorsprünge 5.5 jeweils in einem unteren Bereich der Halteschenkel 5.2 angeordnet. Weiterhin sind die Vorsprünge 5.5 jeweils stufenförmig ausgebildet und ragen senkrecht von dem jeweiligen seitlichen Randbereich R ab.

Beispielsweise weist die Halterung 5 eine vorgegebene Breite B (in Querrichtung), eine vorgegebene Höhe H (in vertikaler Richtung) und eine vorgegebene Länge L (Weite, Ausdehnung der Halterung 5 in Längsrichtung) auf. Ein Gesamtgewicht der aus der Halterung 5, dem Getriebegehäuse 9 mit dem Getriebeelement 7 und dem Antriebselement 8 gebildeten Getriebeeinheit G ist besonders leicht und liegt in einem Bereich von 55 g bis 100 g, insbesondere von 60 g bis 70 g, und beträgt beispielsweise 67 g.

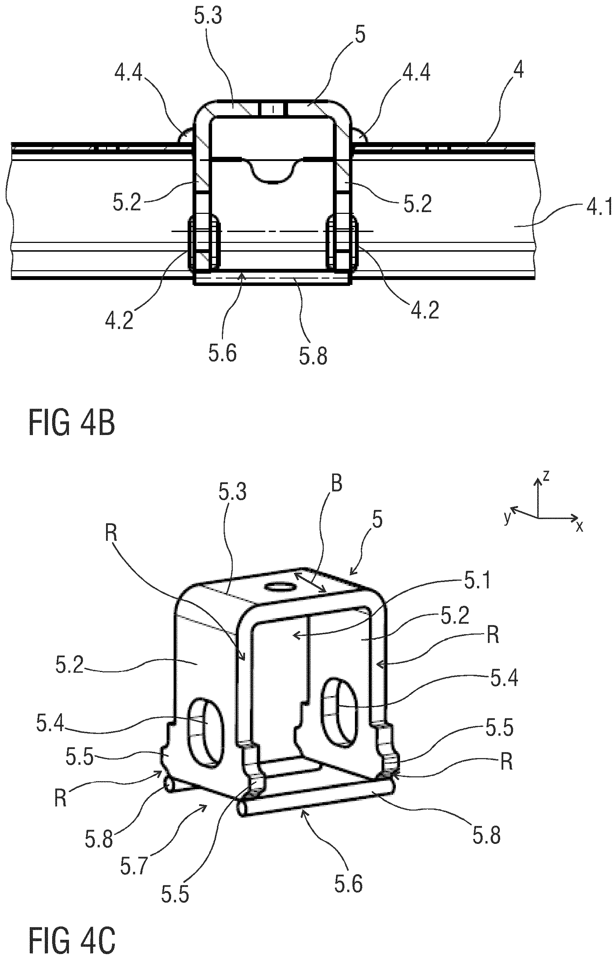

**Figur 4B** zeigt die Figur 4A im Schnitt ohne montierter Getriebeeinheit G. Das Versteifungselement 5.6 ist dabei am offenen Ende 5.7 der Halterung 5 derart angeordnet, dass es die freien Enden der Halteschenkel 5.2 verbindet. Beispielsweise ist das Versteifungselement 5.6 als eine Strebe 5.8, insbesondere eine Zug- oder Druckstrebe, zum Beispiel als ein Metalldraht oder eine Metallstange, ausgebildet.

**Figur 4C** zeigt ein Ausführungsbeispiel für eine Halterung 5 mit zwei Streben 5.8 am offenen Ende 5.7 und den vier nach außen abstehenden Vorsprüngen 5.5 in perspektivischer Darstellung.

Das Versteifungselement 5.6 ist derart ausgebildet und am offenen Ende 5.7 der Halterung 5 angeordnet, dass eine Öffnung zur Aufnahme der Getriebeeinheit G in die Halterung 5 gebildet ist. Hierdurch ist eine einfache Montage der Getriebeeinheit G in der Halterung 5 trotz des zusätzlichen Versteifungselementes 5.6 möglich.

Um diese Montageöffnung zu bilden, sind die Streben 5.8 am offenen Ende 5.7 der Halterung 5 beispielsweise auf die äußeren Ecken der freien Enden eines jeden Halteschenkels 5.2 gesetzt und dort befestigt, beispielsweise geklebt oder geschweißt.

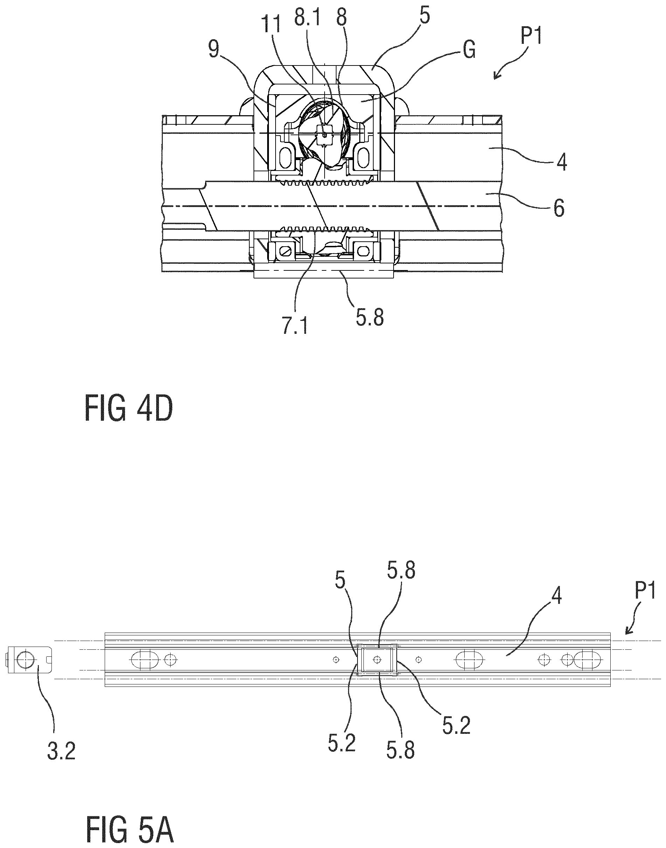

**Figur 4D** zeigt die Halterung 5 mit montierter Getriebeeinheit G und montierter Gewindespindel 6 im montierten Zustand, in welcher die Halterung 5 in der Schienenöffnung 13 fixiert ist.

Die Spindelmutter 7.1 ist längsbeweglich auf der Gewindespindel 6 angeordnet. Das Antriebselement 8 umfasst ein Schneckenrad 8.1, das in die Spindelmutter 7.1 eingreift und im Betrieb diese dreht, so dass diese sich aufgrund des korrespondierenden Innengewindes auf der Gewindespindel 6 entlang der Längsausrichtung der Gewindespindel 6 bewegt und eine Längsverstellung der Schiene 4 relativ zur Schiene 3 ermöglicht.

**Figuren 5A bis 5D** zeigen verschiedene Ansichten auf das offene Ende 5.7 der in der Schiene 4 montierten Halterung 5 mit oder ohne Getriebeeinheit G zur besseren Darstellung des Versteifungselements 5.6.

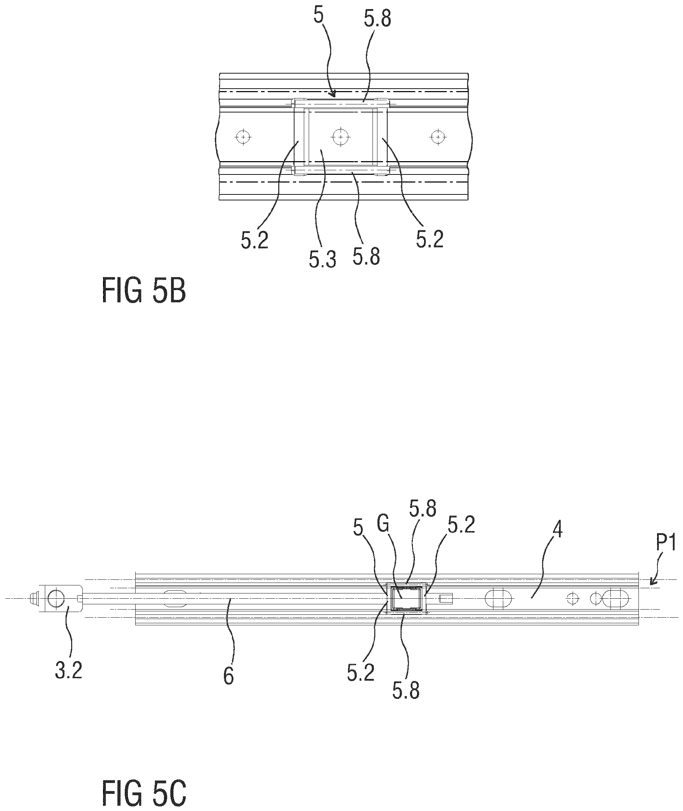

**Figuren 5A** **und** **5B** zeigen die vormontierten Streben 5.8, die auf die äußeren Ecken der Halteschenkel 5.2 angeordnet sind. Die Getriebeeinheit G ist noch nicht in der Halterung 5 montiert. Dabei verbindet jeweils eine Strebe 5.8 die einander parallel gegenüberliegenden äußeren Ecken der Halteschenkel 5.2.

In einer weiteren Ausführungsform ist das Versteifungselement 5.6 vormontiert und kann eine Montageeinheit bilden. Beispielsweise können mehrere Streben 5.8 zu einem Rahmen zusammengesetzt sein und als ein Versteifungsrahmen auf die freien Enden der Halteschenkel 5.2 angeordnet und mit diesen fixiert werden.

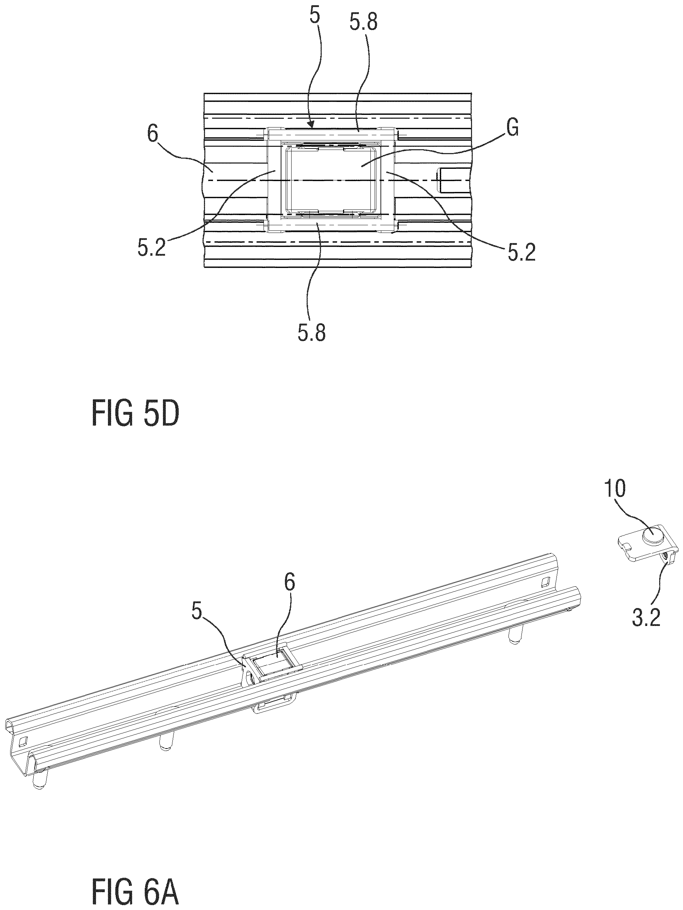

**Figuren 5C** **und** **5D** zeigen die Halterung 5 in gleicher Ansicht wie in Figuren 5A und 5B, aber mit montierter Getriebeeinheit G und montierter Gewindespindel 6. Nach Montage der Halterung 5 in der Schiene 4 wird die Getriebeeinheit G als ein Montagemodul in die Halterung 5 eingebracht, vom offenen Ende 5.7 und in der Halterung 5 fixiert.

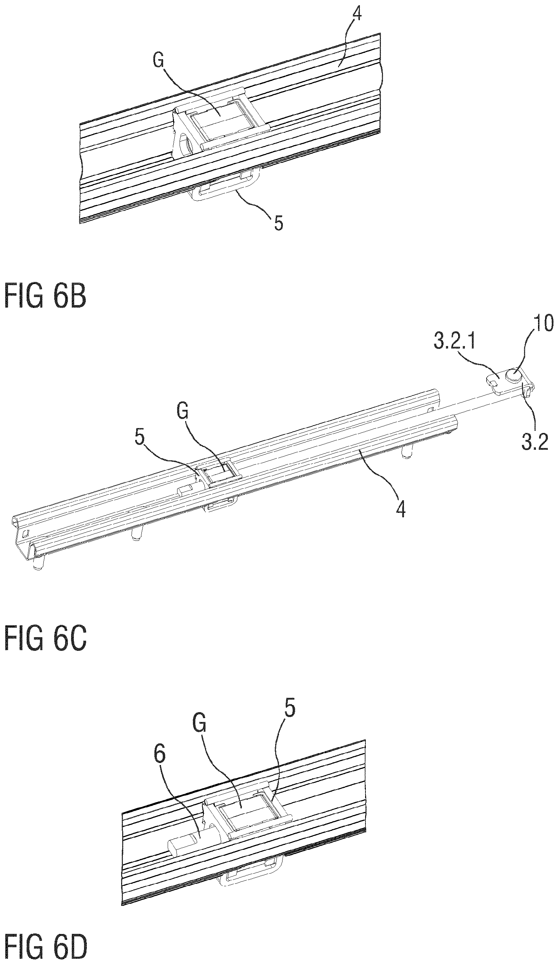

**Figuren 6A** **und** **6B** zeigen die Halterung 5 mit montierter Getriebeeinheit G.

**Figuren 6C und 6D** zeigen die anschließende Montage der Gewindespindel 6 in der Getriebeeinheit G.

Weiterhin kann unter der Gewindespindel 6 und unterhalb der Halterung 5 ausreichend Bauraum BR zur Aufnahme eines Befestigungsstiftes 10 des Halteelementes 3.2 bei einer Längsverstellung der oberen Sitzschiene 4 vorgesehen sein.

Die Gewindespindel 6 ist am L-förmigen Halteelement 3.2 mit nach innen gerichteter Befestigungsseite 3.2.1 befestigt. Unter der nach innen gerichteten Befestigungsseite 3.2.1 wird insbesondere die Ausrichtung der Befestigungsseite 3.2.1 nach innen in den Bauraum BR des betreffenden Schienenpaares P1 oder P2 verstanden.

Das Getriebegehäuse 9 ist mehrteilig ausgebildet und kann mehrere Gehäuseteile, beispielsweise Gehäuseschalen oder -platten, umfassen. Die Gehäuseteile sind miteinander form-, kraft- oder stoffschlüssig verbunden. Hierzu liegen sie insbesondere bereichsweise, beispielsweise mit ihren Kanten oder Rändern aneinander an. Dabei sind die Gehäuseteile beispielsweise miteinander verklemmt, verrastet, gesteckt, verschraubt, verschweißt oder verklebt.

Das Getriebegehäuse 9 weist insbesondere an die Halterung 5 angepasste Abmessungen und/oder eine angepasste Form auf oder umgekehrt.

Beispielsweise weist das Getriebegehäuse 9 eine vorgegebene Breite B (in Querrichtung), eine vorgegebene Höhe H (in vertikaler Richtung) und eine vorgegebene Länge L auf. Ein Gewicht des Getriebegehäuses 9 mit dem innerhalb des Getriebegehäuses 9 angeordneten Getriebeelements 7 und dem Antriebselement 8 liegt beispielsweise in einem Bereich von 25 g bis 50 g.

In allen Ausführungsbeispielen ist die Halterung 5 mit dem geschlossenen Ende an der beweglichen Sitzschiene 4 des einen Schienenpaares P1 befestigt, beispielsweise geschweißt, geklipst, gelötet, geklebt oder gesteckt.

In einer weiteren Ausführungsform können die Halterung 5 und das/die Versteifungselement/e 5.6 zu einer Vorbaugruppe vormontiert sein. Die Vorbaugruppe wird dann als eine Baueinheit von unten in die obere, bewegliche Sitzschiene 4 montiert.

Dabei kann die Getriebeeinheit G vor einer Montage des/der Versteifungselements/e in die Halterung 5 montiert werden. Alternativ kann bzw. können das oder die Versteifungselement/e 5.6 derart am offenen Ende 5.7 der Halterung 5 angeordnet sein, dass eine Öffnung zur Aufnahme der Getriebeeinheit G in die Halterung 5 gebildet ist.

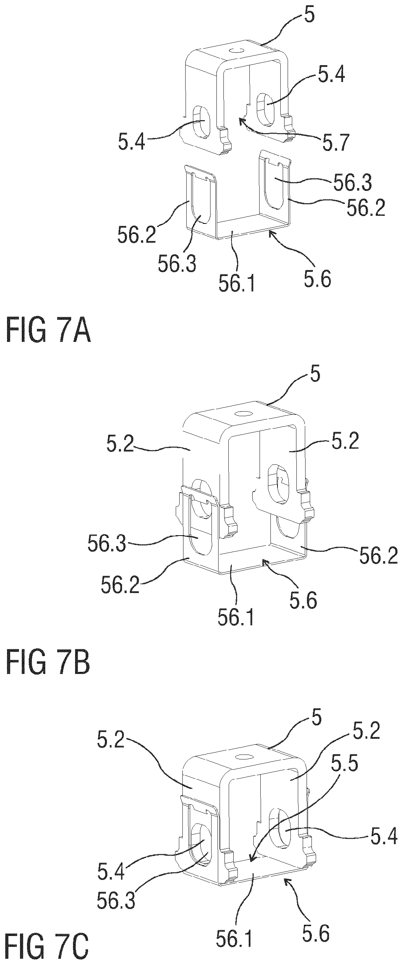

**Figuren 7A bis 7C** zeigt schematisch verschiedene Darstellungen einer alternativen Ausführungsform eines Versteifungselements 5.6 für die Halterung 5 der Getriebeeinheit G des Längseinstellers 2.

Anstelle der Streben 5.8 des ersten Ausführungsbeispiels ist das Versteifungselement 5.6 als eine Klammer 56.1, insbesondere eine Federklammer, beispielsweise ein Federstahlblech, ausgebildet. Die Klammer 56.1 ist ein Profilelement und beispielsweise als ein U-Profil ausgebildet. Die Klammer 56.1 weist hierzu Klammerschenkel 56.2 auf. Die Klammer 56.1 ist beispielsweise ein U-förmig gebogenes Federstahlblech.

Die Klammer 56.1 wird auf das offene Ende 5.7 der Halterung 5 aufgesetzt (Figur 7A). Dabei gelangen die Klammerschenkel 56.2 in Überlappung mit den Halteschenkeln 5.2 der Halterung 5 (Figur 7B).

Die Klammerschenkel 56.2 weisen jeweils eine Öffnung 56.3 auf. Diese Öffnungen 56.3 sind im vollständig auf die Halterung 5 aufgesetzten Zustand fluchtend mit den Durchgangsöffnungen 5.4 in den Halteschenkeln 5.2 der Halterung 5 angeordnet (Figur 7C).

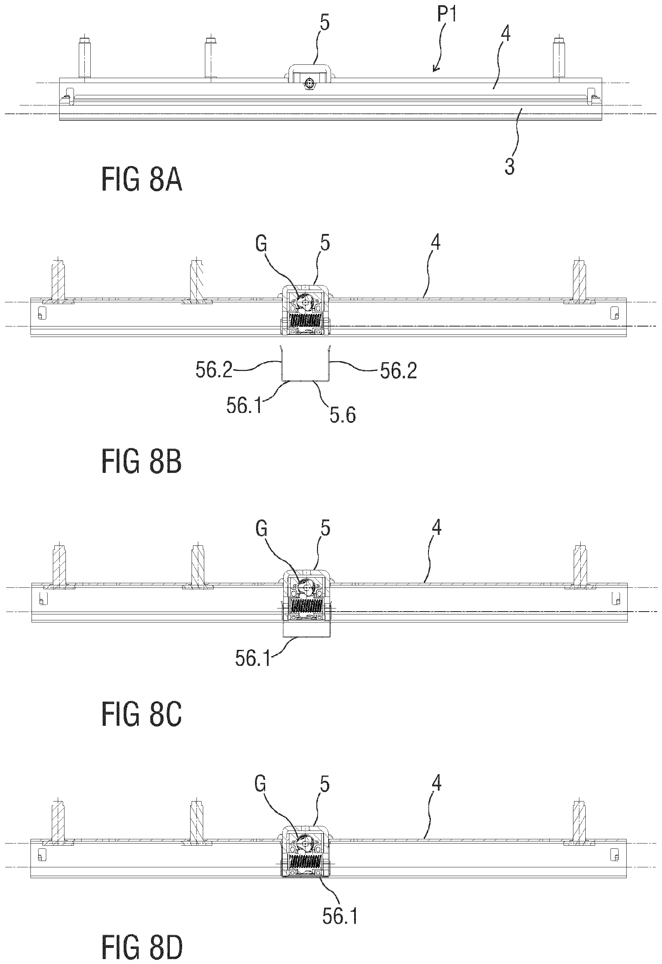

**Figuren 8A bis 8D** zeigen schematisch verschiedene perspektivische Darstellungen der Halterung 5 mit dem alternativen als Klammer 56.1 ausgebildeten Versteifungselement 5.6.

**Figur 8A** zeigt die Getriebeeinheit G im vollständig eingesetzten Zustand im Hohlraum BR des Schienenpaares P1.

**Figuren 8B bis 8D** zeigen nur die bewegliche, obere Sitzschiene 4 mit der darin angeordneten Halterung 5 mit der bereits oben zu den Figuren 1A bis 6D beschriebenen Getriebeeinheit G. In **Figur 8B** ist zunächst nur die Halterung 5 mit der Getriebeeinheit G an der beweglichen, oberen Sitzschiene 4 angeordnet und befestigt.

Das klammerförmige Versteifungselement 5.6 wird mit den freien Enden der Klammerschenkeln 56.2 auf die Halterung 5 gesetzt, wie in **Figur 8B** gezeigt.

**Figur 8C** zeigt die teilweise aufgesetzte Klammer 56.1, in Analogie zur Figur 7B.

In **Figur 8D** ist die Klammer 56.1 vollständig auf die Halterung 5 aufgesetzt, so dass die Öffnungen 56.3 der Klammer 56.1 fluchtend zu den Durchgangsöffnungen 5.4 der Halterung 5 liegen, so dass die Gewindespindel 6 durchgeführt werden kann.

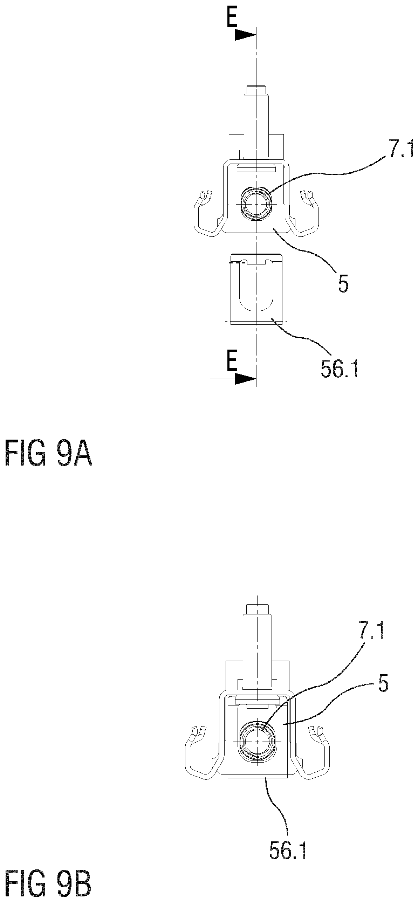

**Figuren 9A und 9B** zeigen schematisch in Draufsicht auf die Querseite die Halterung 5 mit der Klammer 56.1 vor der Montage auf die Halterung 5 bzw. nach der Montage.

### Bezugszeichenliste

- 1: Fahrzeugsitz
- 1.1: Sitzfläche
- 1.2: Rückenlehne
- 2: Längseinsteller
- 3,4: Sitzschiene
- 3.1, 4.1: Schienenseitenwand
- 3.2: Halteelement
- 3.2.1: Befestigungsseite
- 4.2: Ausnehmung
- 4.4: Anschlag
- 5: Halterung
- 5.1: Schenkelöffnung
- 5.2: Halteschenkel
- 5.3: Abschnitt
- 5.4: Durchgangsöffnung
- 5.5: Vorsprung
- 5.6: Versteifungselement
- 5.7: offenes Ende
- 5.8: Strebe
- 56.1: Klammer
- 56.2: Klammerschenkel
- 56.3: Öffnung
- 6: Gewindespindel
- 7: Getriebeelement
- 7.1: Spindelmutter
- 8: Antriebselement
- 8.1: Schneckenrad
- 9: Getriebegehäuse
- 10: Befestigungsstift
- 11: Übertragungseinheit
- 12: Motoreinheit
- 13: Schienenöffnung

- x, y, z: Achse

- A: Abstand
- B: Breite
- BR: Hohlraum/Bauraum
- F: Verfahrweg
- G: Getriebeeinheit
- H: Höhe
- L: Länge
- P1, P2: Schienenpaare
- R: Randbereich
- SA: Schienenanordnung

## Patentansprüche

1. Längseinsteller (2) für einen Fahrzeugsitz (1), umfassend:
- eine Schienenanordnung (SA) mit zwei Schienenpaaren (P1, P2) von Sitzschienen (3, 4), wobei das jeweilige Schienenpaar (P1, P2) eine feste Sitzschiene (3) und eine relativ zur festen Sitzschiene (3) bewegliche, Sitzschiene (4) aufweist,
- eine Motoreinheit (12),
- eine Getriebeeinheit (G), die die Motoreinheit (12) und die bewegliche Sitzschiene (4) zumindest eines der Schienenpaare (P1) miteinander koppelt, sowie
- eine Halterung (5) zur Aufnahme eines Getriebegehäuses (9) der Getriebeeinheit (G),
wobei die Halterung (5) mit der Getriebeeinheit (G) in einem durch das eine Schienenpaar (P1) gebildeten Hohlraum (BR) angeordnet ist und an deren beweglichen Sitzschiene (4) befestigt ist sowie an einem Ende (5.7) offen und am gegenüberliegenden Ende geschlossen ausgebildet ist, wobei die Halterung (5) zumindest zwei Halteschenkel (5.2) umfasst, die in Längsrichtung voneinander beabstandet sind und sich vertikal erstrecken, wobei zwischen den Halteschenkeln (5.2) das Getriebegehäuse (9) angeordnet ist, **dadurch gekennzeichnet, dass**
die Halterung (5) am offenen Ende (5.7) zumindest ein Versteifungselement (5.6) aufweist, das freie Enden der Halteschenkel (5.2), die das offene Ende (5.7) der Halterung (5) bilden, verbindet.

2. Längseinsteller (2) nach Anspruch 1, wobei die Halterung (5) mit dem geschlossenen Ende an der beweglichen Sitzschiene (4) des einen Schienenpaares (P1) befestigt ist.

3. Längseinsteller (2) nach Anspruch 1 oder 2, wobei das Versteifungselement (5.6) derart am offenen Ende angeordnet ist, dass eine Öffnung zur Aufnahme der Getriebeeinheit (G) in die Halterung (5) gebildet ist.

4. Längseinsteller (2) nach einem der vorhergehenden Ansprüche, wobei die Halterung (5) und das Versteifungselement (5.6) zu einer Vorbaugruppe vormontiert sind.

5. Längseinsteller (2) nach einem der vorhergehenden Ansprüche, wobei das Versteifungselement (5.6) am offenen Ende (5.7) der Halterung (5) befestigt ist.

6. Längseinsteller (2) nach einem der vorhergehenden Ansprüche, wobei das Versteifungselement (5.6) als mindestens eine Strebe (5.8) ausgebildet ist.

7. Längseinsteller (2) nach einem der vorhergehenden Ansprüche, wobei das Versteifungselement (5.6) als eine Klammer (56.1) ausgebildet ist.

8. Längseinsteller (2) nach einem der vorhergehenden Ansprüche, wobei die Halterung (5) als ein U-Profil ausgebildet ist.

9. Längseinsteller (2) nach Anspruch 8, wobei das U-Profil die zwei Halteschenkel (5.2) aufweist, an deren Ende das mindestens eine Versteifungselement (5.6) angeordnet ist und die Halteschenkel (5.2) verbindet.

10. Fahrzeugsitz (1) mit einem Längseinsteller (2) nach einem der vorhergehenden Ansprüche.

## Claims

1. Longitudinal adjuster (2) for a vehicle seat (1), comprising:
- a rail arrangement (SA) with two rail pairs (P1, P2) of seat rails (3, 4), the respective rail pair (P1, P2) having a fixed seat rail (3) and a seat rail (4) which is movable relative to the fixed seat rail (3),
- a motor unit (12),
- a gear unit (G) which couples the motor unit (12) and the movable seat row (4) of at least one of the rail pairs (P1) to one another, and
- a holder (5) for receiving a gear housing (9) of the gear unit (G),
the holder (5) being arranged with the gear unit (G) in a cavity (BR) which is formed by way of the one rail pair (P1) and being fastened to its movable seat rail (4), and being of open configuration at one end (5.7) and being of closed configuration at the opposite end, the holder (5) comprising at least two holding limbs (5.2) which are spaced apart from one another in the longitudinal direction and extend vertically, the gear housing (9) being arranged between the holding limbs (5.2),
**characterized in that**
the holder (5) has, at the open end (5.7), at least one reinforcing element (5.6) which connects free ends of the holding limbs (5.2) which form the open end (5.7) of the holder (5).

2. Longitudinal adjuster (2) according to Claim 1, the holder (5) being fastened with the closed end to the movable seat rail (4) of the one rail pair (P1).

3. Longitudinal adjuster (2) according to Claim 1 or 2, the reinforcing element (5.6) being arranged at the open end in such a way that an opening for receiving the gear unit (G) into the holder (5) is formed.

4. Longitudinal adjuster (2) according to one of the preceding claims, the holder (5) and the reinforcing element (5.6) being preassembled to form a preliminary assembly.

5. Longitudinal adjuster (2) according to one of the preceding claims, the reinforcing element (5.6) being fastened to the open end (5.7) of the holder (5).

6. Longitudinal adjuster (2) according to one of the preceding claims, the reinforcing element (5.6) being configured as at least one strut (5.8).

7. Longitudinal adjuster (2) according to one of the preceding claims, the reinforcing element (5.6) being configured as a bracket (56.1).

8. Longitudinal adjuster (2) according to one of the preceding claims, the holder (5) being configured as a U-beam.

9. Longitudinal adjuster (2) according to Claim 8, the U-beam having the two holding limbs (5.2), at the end of which the at least one reinforcing element (5.6) is arranged and connects the holding limbs (5.2).

10. Vehicle seat (1) with a longitudinal adjuster (2) according to one of the preceding claims.

## Revendications

1. Mécanisme de réglage longitudinal (2) pour un siège de véhicule (1), comprenant :
- un agencement de rails (SA) avec deux paires de rails (R1, P2) de rails de siège (3, 4), la paire de rails respective (P1, P2) présentant un rail de siège fixe (3) et un rail de siège mobile (4) par rapport au rail de siège fixe (3),
- une unité de moteur (12),
- une unité de transmission (G) qui couple entre eux l'unité de moteur (12) et le rail de siège mobile (4) d'au moins une des paires de rails (P1), ainsi que
- un support (5) pour recevoir un boîtier de transmission (9) de l'unité de transmission (G),
le support (5) étant agencé avec l'unité de transmission (G) dans un espace creux (BR) formé par l'une des paires de rails (P1) et étant fixé à son rail de siège mobile (4) ainsi qu'étant configuré sous forme ouverte à une extrémité (5.7) et sous forme fermée à l'extrémité opposée, le support (5) comprenant au moins deux branches de support (5.2) qui sont espacées l'une de l'autre dans la direction longitudinale et s'étendent verticalement, le boîtier de transmission (9) étant agencé entre les branches de support (5.2), **caractérisé en ce que**
le support (5) présente à l'extrémité ouverte (5.7) au moins un élément de renforcement (5.6) qui relie les extrémités libres des branches de support (5.2) qui forment l'extrémité ouverte (5.7) du support (5).

2. Mécanisme de réglage longitudinal (2) selon la revendication 1, dans lequel le support (5) est fixé par l'extrémité fermée au rail de siège mobile (4) de l'une des paires de rails (P1).

3. Mécanisme de réglage longitudinal (2) selon la revendication 1 ou 2, dans lequel l'élément de renforcement (5.6) est agencé à l'extrémité ouverte de telle sorte qu'une ouverture est formée pour recevoir l'unité de transmission (G) dans le support (5).

4. Mécanisme de réglage longitudinal (2) selon l'une quelconque des revendications précédentes, dans lequel le support (5) et l'élément de renforcement (5.6) sont prémontés pour former un groupe préassemblé.

5. Mécanisme de réglage longitudinal (2) selon l'une quelconque des revendications précédentes, dans lequel l'élément de renforcement (5.6) est fixé à l'extrémité ouverte (5.7) du support (5).

6. Mécanisme de réglage longitudinal (2) selon l'une quelconque des revendications précédentes, dans lequel l'élément de renforcement (5.6) est configuré sous la forme d'au moins une entretoise (5.8).

7. Mécanisme de réglage longitudinal (2) selon l'une quelconque des revendications précédentes, dans lequel l'élément de renforcement (5.6) est configuré sous la forme d'une pince (56.1).

8. Mécanisme de réglage longitudinal (2) selon l'une quelconque des revendications précédentes, dans lequel le support (5) est configuré sous la forme d'un profilé en U.

9. Mécanisme de réglage longitudinal (2) selon la revendication 8, dans lequel le profilé en U présente les deux branches de support (5.2) à l'extrémité desquelles l'au moins un élément de renforcement (5.6) est agencé et relie les branches de support (5.2).

10. Siège de véhicule (1) avec un mécanisme de réglage longitudinal (2) selon l'une quelconque des revendications précédentes.
